# EUROPEAN PATENT SPECIFICATION

(11) **EP 2 341 189 B1**
(45) Date of publication and mention of the grant of the patent: **17.07.2013**
(21) Application number: 10191446.3
(22) Date of filing: 16.11.2010
(51) Int. Cl.: E02F 3/43, E02F 3/627, A01B 63/10, A01D 87/00, B62D 49/02, E02F 9/22, A01B 59/06, E02F 9/20

(54) **Front loader and rear loader adapter for a tractor**
Frontlader und hintere Beladungsadapter für einen Traktor
Chargeur frontal et adaptateur arrière de chargeur pour un tracteur

(30) Priority: 31.12.2009 GB 0922715
(43) Date of publication of application: 06.07.2011
(73) Proprietor: AGCO GmbH, 87616 Marktoberdorf (DE)
(72) Inventor: Knoblosh, Juergen, 87674 Immenhofen (DE)
(74) Representative: Smith, Louise Marie

(56) References cited:
- WO-A1-2007/125120
- DE-A1- 10 120 733
- GB-A- 2 325 607
- GB-A- 2 356 848
- US-A- 3 434 737
- US-A- 3 554 396
- US-A- 4 753 568
- US-A- 5 560 130
- US-A1- 2003 217 852
- US-A1- 2006 018 745
- US-B1- 6 405 806

## Description

This invention relates to a loader adapter for a vehicle. More specifically this invention relates to a loader adapter for attaching a front loader to the rear of an agricultural tractor.

For a long time front loaders have been fitted to agricultural tractors for the handling of bulk material such as grain, muck, silage and hay. Typically, front loaders are equipped to host attachments of various types such as buckets, forks or grabs to cater for different tasks. A typical front loader comprises a pair of opposing upright members which are pivotally attached to a pair of opposing lift arms at one end. The other end of each lift arm is pivotally connected to a loading attachment such as a bucket or fork or grab. Each lift arm comprises two lift members which are rigidly connected to each other. Each of the upright member are attached either side of the tractor engine compartment which is disposed forwardly of the tractor cab. The lift arms are driven by two pairs of hydraulic cylinders. One pair of cylinders lifts and lowers the lift arms whilst the other pair pivot the attachment.

GB-A-2356848 shows a front loader according to the preamble of claim 1.

The attachment of a front loader to a tractor requires a stable connection to the tractor. The front loader may be connected directly to the tractor engine compartment or chassis, or by way of a loader adaptor/frame fitted to the front of the tractor. Space at the front of a tractor is limited owing to the position of the engine and/or exhaust treatment installations. Adapters, or frames fitted to a tractor for mounting a front loader can reduce the view over the front of the tractor from the cab, especially over the front wheels. It is therefore not always practical to use a frame or adapter to attach a front loader to the front of a tractor.

Front loaders are sold for specific tractor sizes (with varying engine compartment widths). Therefore, if a fleet of tractors comprises various different sizes of tractors (and different brands of tractors) it is likely that each tractor will require its own loader which has cost implications. Additionally, owing to the track installations on tracked tractors the front loaders described cannot be mounted to the front of a tracked tractor.

Since the front loader is fixedly mounted to the front of the tractor the height to which an attachment carried by the loader can be highered, or lowered is limited by the length of the lift arms. Further, given the longitudinally extending engine compartment in front of the cab it can be difficult for the driver to clearly see all the work that the loader is doing in front of the engine. In particular it can be difficult to see the depth and shape of a hole being dug.

A restriction concerning the use of front loaders mounted to the front of a tractor is the weight which can be applied to the front axle system of the tractor. This is especially true for smaller tractors having front steered and suspended axle systems which can carry less weight than their unsuspended rear axles. As a consequence the size of the front loader and therefore the load it can carry is restricted by the weight the front axle system can bear.

It is therefore an object of the present invention to provide a loader adapter for a tractor to overcome the shortcomings mentioned above.

According to the invention there is provided a tractor front according to the independent claim.

By attaching the front loader to the rear links of the tractor using an adapter the same front loader can be fitted to various types and sizes (and brands) of tractors. Further the loader can be moved higher and lower than if mounted to the front of the tractor since the pivotal rear linkage to which the adapter is attached can be highered and lowered. Further still, the attachment of a front loader to the rear of a tractor enables a higher capacity front loader to be fitted to a smaller tractor than that which is possible for attachment at the front of the tractor.

The installation of a front loader on the rear of the tractor is more stable compared to front axle because most front axles allow pendular movement which can result in increased rolling tendencies. It is also more stable and safe during high speed operation as the existing linkage control and damping systems at the rear of the tractor are designed for heavy loads as applied by the front loader.

Preferably, the adapter further comprises two vertical supports carrying a coupling ball for attachment to an upper link of the tractor.

Preferably, the attachment means provided on the vertical attachment posts of the adapter are of the quick attach type conventionally used to mount a loader on the front of a tractor using similar vertically extending posts provided in front of the tractor operator's cab.

More preferably, the first attachment means is provided with two coupling balls for connection to two lower links.

The linkage of a tractor fitted with an adapter is preferably provided with at least one force sensor. In this respect the tractor operator can be alerted when the loader experiences a compressional force for example, when the loader is pushed into a heap of earth.

Preferably, the speed of the tractor is decreased upon detection of compressional force. This prevents damage when a tractor is driven at speed into an object.

The tractor may be provided with a swivel seat which can turn to face the rear of the tractor thus allowing the tractor operator to face the direction of travel. Since the view to the rear from the cab does not involve looking over the engine compartment, the driver has better visibility of what the loader is doing

More preferably the tractor is fitted with a steering wheel which is moveable to face the rear of the tractor

Preferably, the tractor is provided with rear wheel steering in reverse mode. In this respect the driver has improved manoeuvrability in reverse when using the front loader.

Preferably the tractor is provided with a control system for use with the adapter for moving an attachment on the loader arm to the furthest vertical distance above or below the ground, and/or moving the attachment to the furthest/nearest horizontal distance from the tractor, wherein the loader arm/ attachment is first fully extended or fully retracted and then the rear linkage is moved to further extend or further retract the loader arm/attachment.

More preferably the control system comprises combination valve means connecting hydraulic cylinders which operate the linkage and loader arm/attachment such that when the loader arm/attachment cylinders are fully extended or fully retracted the appropriate linkage cylinders are then automatically further extended or further retracted.

Preferably, the control system is controlled by a single lever.

According to a further aspect of the invention there is provided a tractor provided with attachment means for attaching a front loader to the rear linkage of the tractor.

The invention will now be described, by way of example only, with reference to the following drawings in which,
Figure 1 shows a side view of a standard mid range tractor fitted with a typical front loader at the front of the vehicle,
Figure 2 shows a side view of a high range tractor with a front loader fitted to the rear links of the tractor using an adapter in accordance with the invention,
Figure 3 shows the high range tractor and loader of figure 2 in which the loader is shown in the raised position,
Figures 4 and 5 show the high range tractor and loader of figure 2 in different loader positions,
Figure 6 is a perspective view of the loader and adapter of figures 2 to 5,
Figure 7 is a perspective view of the adapter in accordance with the invention,
Figure 8 is an exploded view of figure 7, and
Figure 9 shows a diagrammatic scheme of the connection of the front loader used in association with the adapter in accordance with the invention.

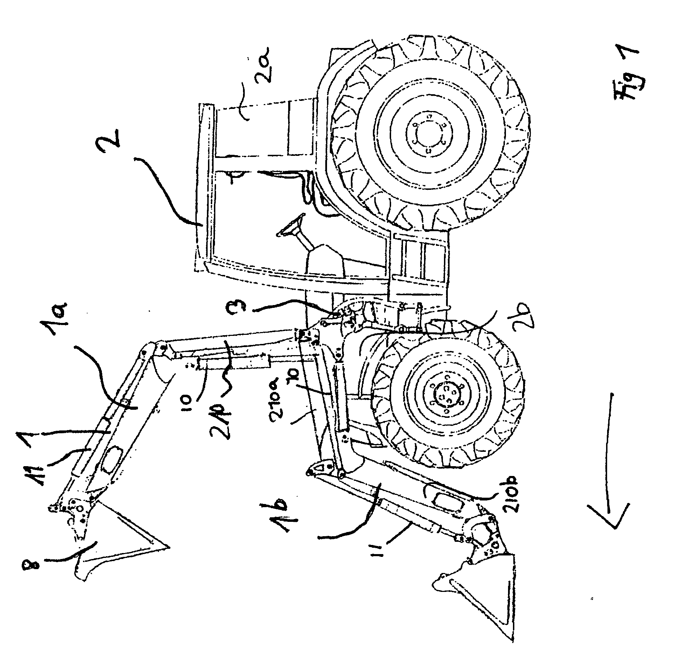

Figure 1 shows a mid range (less than 200hp) tractor 2 having a cab 2a and an engine housed within an engine compartment 2b which is disposed forwardly of the cab. The term forwardly is used in relation to the normal forward direction of the tractor indicated by the arrow.

A standard front loader 1 is attached to the front of the tractor 2. The front loader 1 is shown in two positions 1 a and 1 b, the raised and lowered positions respectively. The front loader 1 comprises two upright members 3 for attaching the loader 1 to the tractor 2 on either side of the engine compartment 2b and two parallel lift arms 210 pivotally attached at one end to the upright members 3 and at the other end to an attachment which in figure 1 is a bucket 8. Other attachment means may comprise for example a fork or a grab. Each lift arm 210 comprises two lift members 210a and 210b which are welded together. The front loader 1 is driven by two pairs of hydraulic cylinders 10 and 11. Cylinders 10 control the lifting height of the loader 1 and cylinders 11 control the pivotal movement of the bucket 8. In the fully raised position 1a, cylinder 10 is extended. In the lowered position 1b, cylinder 10 is retracted. The tractor 2 may be equipped with a standard loader tractor frame (not shown) to which the upright members 3 are attached. Alternatively, the upright members may be attached directly to any part of the tractor, for example the engine or the housing of the drive train.

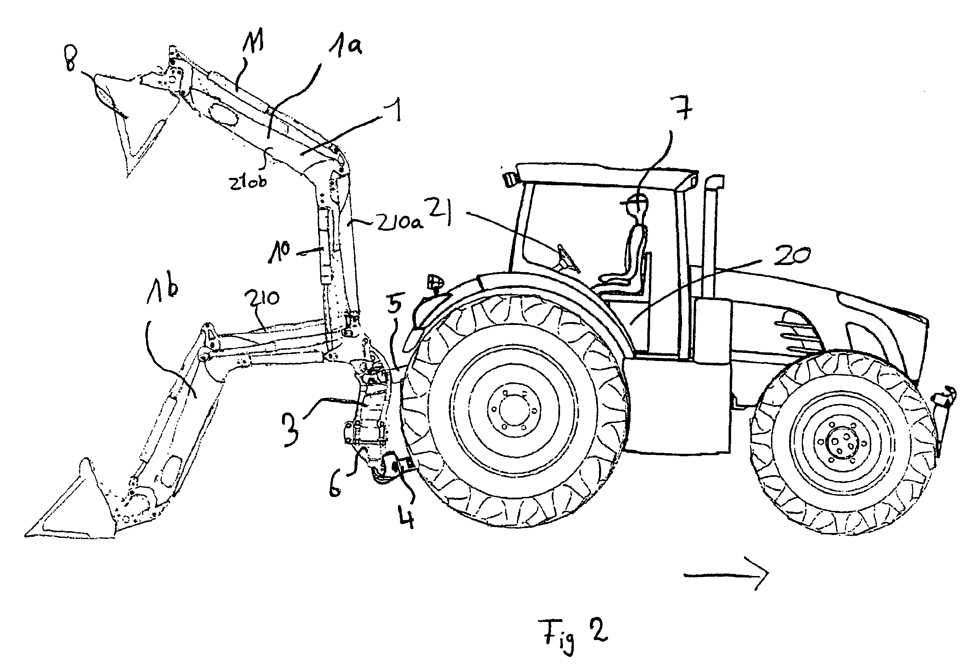

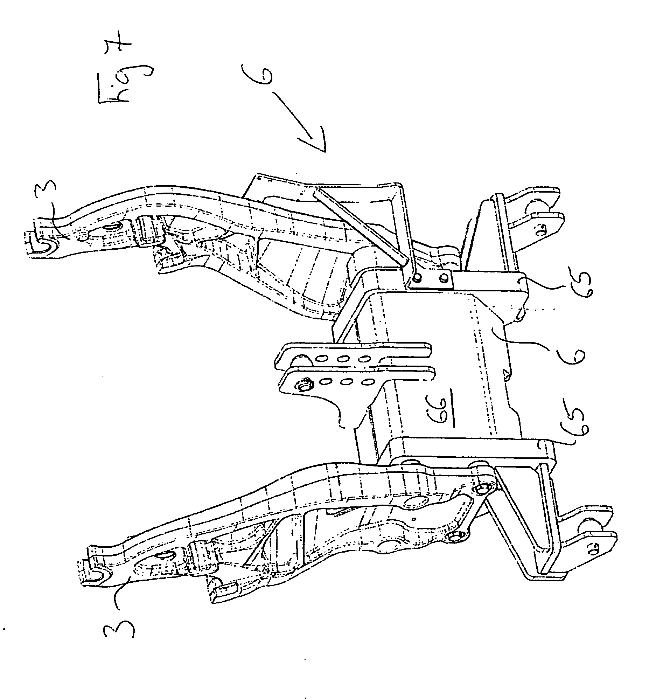

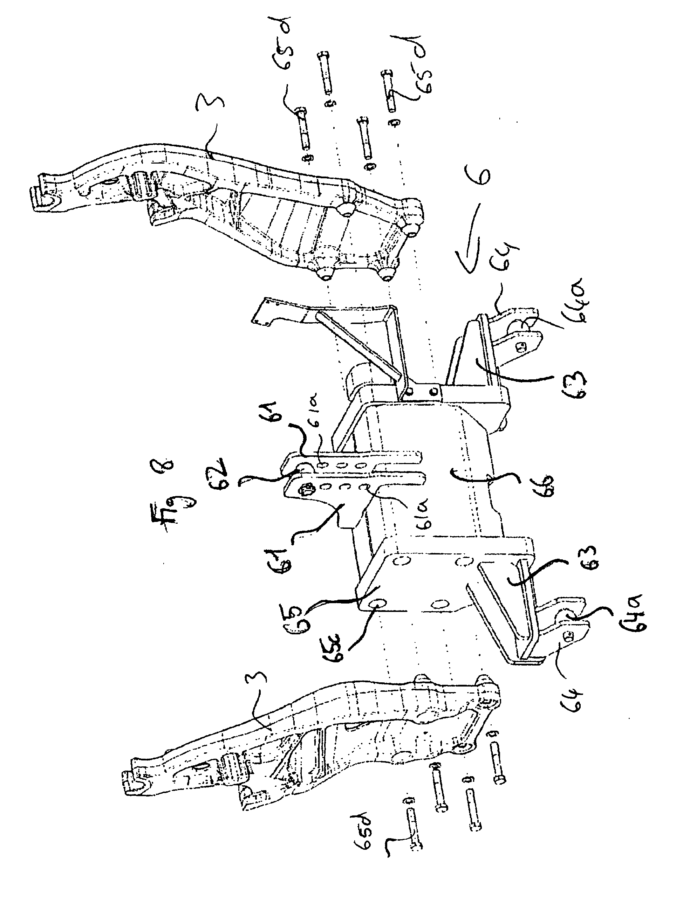

Figure 2 shows the front loader 1 attached to the rear of a tractor 2, for example a high range tractor (greater than 220hp) by way of a loader adapter in accordance with the invention. The loader 1 is shown in raised and lowered positions 1 a and 1b respectively. The adapter 6 shown in greater detail in figures 7 and 8 is connected to the upright members 3 of the loader 1 and the rear linkage 4, 5. The term rear linkage here covers both the hydraulic upper link 5 and the pair of hydraulic lower links 4. The tractor has a swivel seat 20, swivel steering wheel 21 and control panel (not shown) which have been rotated 180 degrees so that the driver now faces the rear of the cab and can see the front loader. The swivel steering wheel, control panel and seat are covered in the applicant's earlier UK patent application No. GB 2440732. The driver can easily drive the tractor 2 in reverse gear whilst facing the direction of travel and operate the loader whilst viewing the loader. Since the driver is closer to the loader when mounted to the rear of the tractor than when mounted to the front of the loader, the driver can oversee the operation of the loader more easily. In particular, the driver has a better view of the depth of a hole being dug.

A counter weight (not shown) may be attached to the front of the tractor to help stablise the tractor.

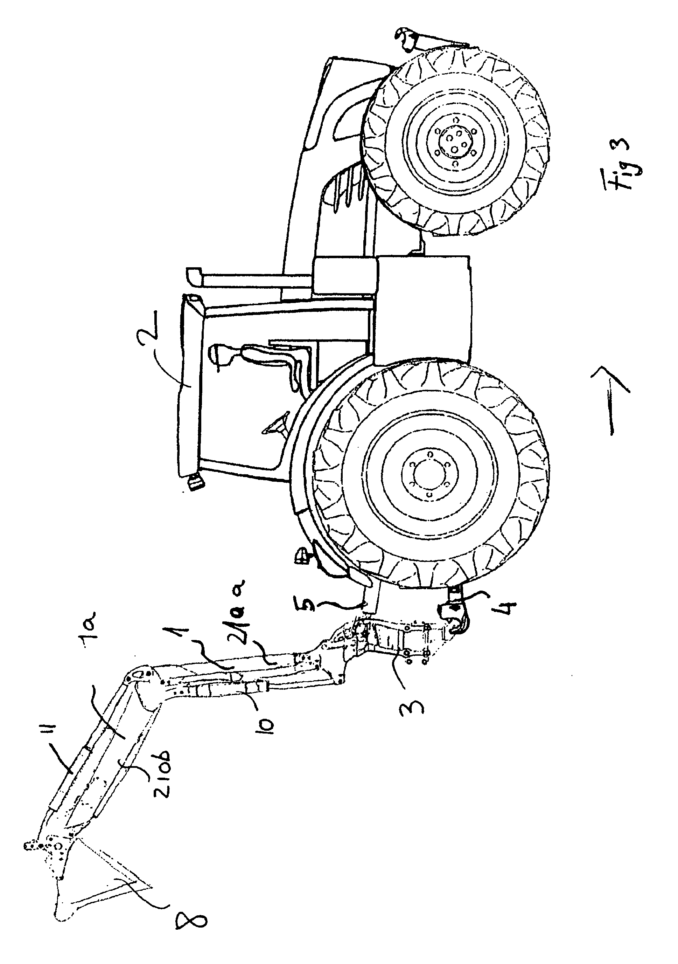

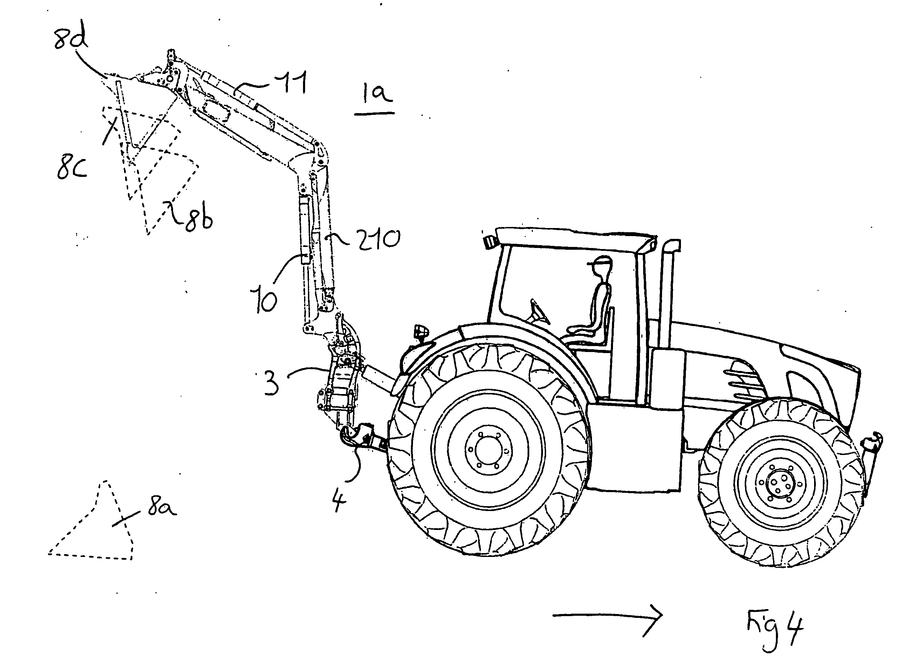

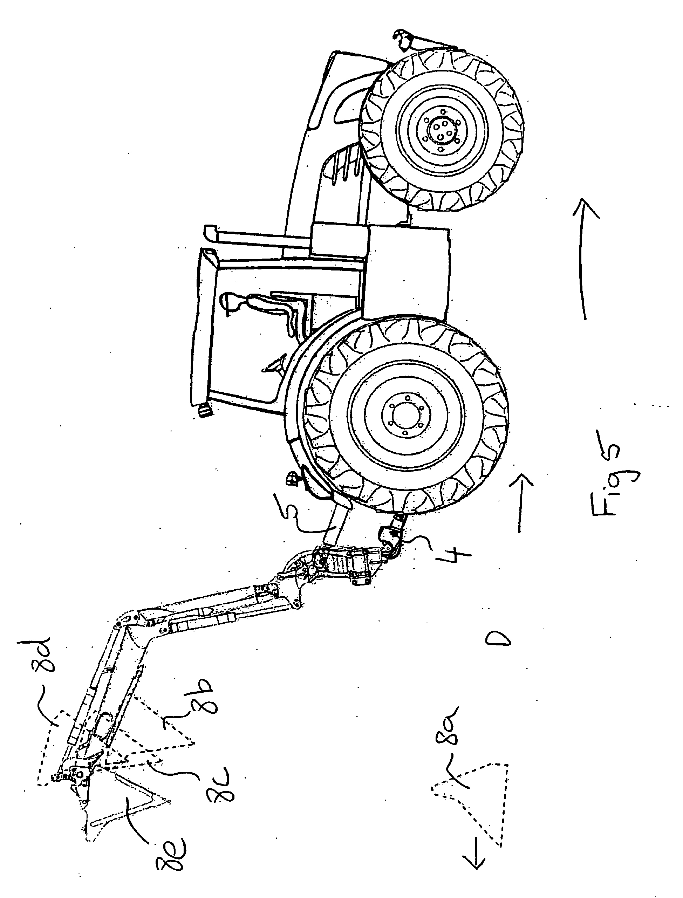

Figure 3 shows the front loader 1 in raised position 1 a with the lower links 4 being in a generally horizontal position and the upper link 5 is in a mid (generally horizontal) position. By raising links 5 and 4 the height of the loader can be raised upto 1 metre higher than if the loader was mounted at the front of the tractor to a static frame, or to the tractor directly. Depending on the position of the links 4 and 5 the bucket 8 can be moved into a number of positions whilst the loader is in the raised position to unload the bucket. The bucket positions can be shown more clearly in figures 4 and 5.

Figure 4 shows the loader in its raised position 1a with the lower links4 lifted to their maximum position and upper link 5 in its mid position. The bucket 8 is shown in a number of positions 8a, 8b, 8c and 8d. Position 8a is the lowest position the loader 1 can lower the bucket 8. In this position cylinder 10 is retracted and hydraulic upper link 5 is in it lowest position. In position 8b the loader is in its raised position with the cylinder 10 fully extended and upper link 5 in its lowest position. In position 8c the loader is in its raised position with the cylinder 10 fully extended and upper link 5 in its mid position. In position 8d the loader is in its raised position with cylinder 10 fully extended and upper link 5 in its highest position.

In figure 5 a further bucket position 8e is shown. In this position upper link 5 has been extended to its maximum link length and is in its highest position. Carrying the bucket in position 8e means the dumping distance D (horizontal distance between the tractor and bucket) is at its greatest.

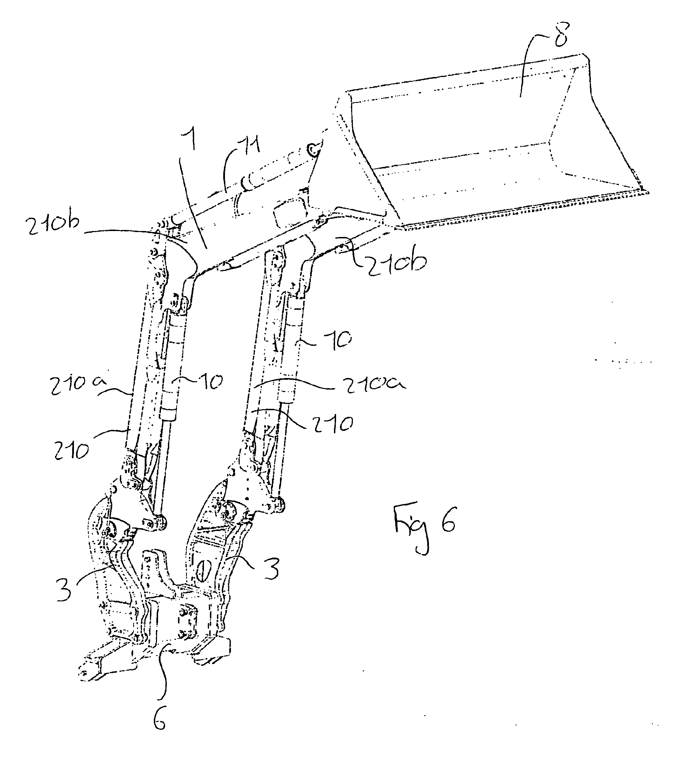

Figure 6 shows a perspective view of the front loader 1 carrying a bucket 8 fitted to the adapter 6.

Figures 7 and 8 are assembled and exploded views respectively of the adapter 6. The adapter 6 comprises a solid body portion 66 made from, for example sheet metal welded together. Alternatively, the body portion may be cast. The body portion 66 is generally of a cuboid shape and provided with a plate 65 welded at each opposing end. The plates 65 are provided with apertures 65c for receiving fixing means such as bolts 65d for attachment to lower portions of upright members 3 of a front loader. Each plate 65 is further provided with two horizontally protruding brackets 63 which are welded to plates 65. Each bracket 63 is provided with an attachment means 64 which protrudes at right angles to the brackets 63. The attachment means 64 may be fitted with standard coupling balls 64a for connection to lower links 4 (not shown) of the tractor 1 (not shown). Two upright support bodies 61 are attached to the upper surface of the body portion 66. Each body 61 is provided with a series of apertures for the connection of a standard coupling ball 62 in a variety of positions. Coupling ball 62 is attachable to hydraulic upper link 5 (not shown).

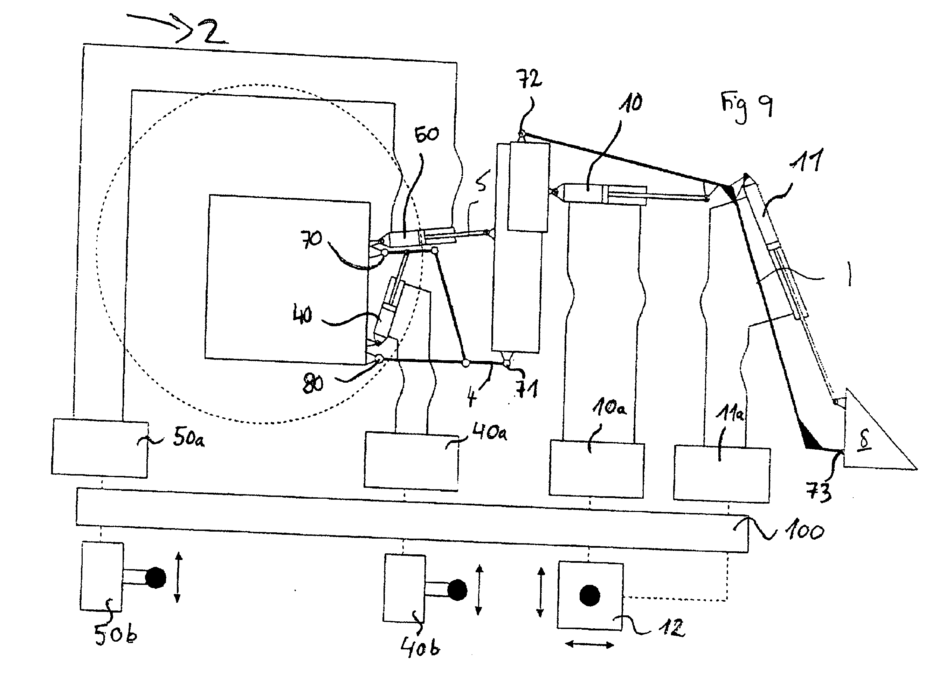

Figure 9 is a connectivity diagram of a front loader 1 attached to the rear of a tractor 2. Loader 1 and bucket 8 is moved by hydraulic cylinders 10 and 11 respectively. Upper link 5 and lower links 4 are moveable by hydraulic cylinders 50 and 40 respectively. Each cylinder 10, 11, 40 and 50 is controlled by a respective valve 10a, 11 a, 40a and 50a and usually each valve is controlled by a respective control lever 40b and 50b which is mounted in the tractor cab. The control levers for both the front loader cylinders 10, 11 are often combined on crossgate lever 12 having two directions of movement, one direction controlling cylinder 10, the other controlling cylinder 11.

For the loader to reach maximum or minimum height cylinder 10 must be brought in to the extended, or retracted position (shown) by using lever 12. Cylinder 40 must then be activated to lift, or lower (as shown) the rear linkage 4 by activating lever 40b. Therefore two different levers must be used to lift and lower the front loader between its highest and lowest positions. For the operator, this is very uncomfortable and if the operator wants to work fast the levers must be operated without looking at them which has safety implications since other levers could be operated in error.

The connectivity diagram in figure 9 therefore shows that cylinders 10, 40, 11 and 50 may be operated by one lever, cross gate lever 12 which controls valves 10a and 40a in a first direction, and valves 11 a and 50a in a second direction at rights angles to the first direction. In this way the operator can easily activate the pivotal movement of the bucket by valve 11 a and the distance of the bucket from the tractor by valve 50a using lever 12 in a first direction and the maximum/minimum height of the loader using lever 12 in a second direction. This mode could be chosen in the vehicle settings. Since the valves are controlled electronically by a tractor control unit 100, software can be used to relate the movement of one lever (or one lever direction) to the control of more than one cylinder 10, 11, 40,50.

In most modern tractors valves are controlled by CAN bus systems so the integration of sensor information, lever movement and valve control can be provided by software connected to the tractor control unit 100.

In this respect valves 10a and 40a may be connected to cross lever 12 so that when cylinder 10 reaches its fully extended/retracted position, valve 40a is then automatically activated to activate cylinder 40 to take the loader to its highest/lowest position. The complete lowering/lifting procedure is thus controlled by cross gate lever 12.

Likewise, valves 11a and 50a may be connected to cross lever 12 to control the dumping distance. Once cylinder 11 has reached fully extended/retracted position, valve 50a is then automatically activated to fully extend/retract cylinder 50. In this way the bucket 8 can be moved into the overall maximum dumping distance D (see figure 5) with the bucket 8 in position 8e.

Cylinders 10 and 11 may be equipped with sensors to detect end positions. Most tractors have an angle sensor 70 for linkage control which is integrated in the pivot pin of the lower link 4.

By fitting appropriate sensors it can be detected whether cylinder 10, is already in its fully extended, or fully retracted position. This can be done by various methods, for example:

### Method 1

The current overall length of the relevant hydraulic cylinder can be measured using a hall sensor bar on the cylinder barrel which detects the current position of the piston.

### Method 2

Pressure sensors may be fitted in the piping between control valve 50a and cylinder 50, control valve 40a and cylinder 40, control valve 10a and cylinder 10 and control valve 11 a and cylinder 11 to indicate whether the cylinders are extended or retracted.

### Method 3

Measuring the pivot angles of the front loader lift arms. The linkage is usually already equipped with an angle sensor 70. To detect the position of all hinges, angle sensor 71 detects movement of upper link and therefore cylinder 50, angle sensor 72 detects movement of lift arm 210 and therefore cylinder 10 and angle sensor 73 (detects movement of bucket 8 and therefore cylinder 11.
The integration of such angle sensors is described in the applicant's earlier patent application GB 2426492

The lower links 4 are usually equipped with a force sensor 80, such as a BOSCH-REXROTH series KMB sensor for controlling the linkage. This sensor is pin shaped and connects the lower links 4 on both sides to a rear axle housing, or generally, to the tractor body. The sensor measures forces in a horizontal direction. A signal from the sensor is normally used for protecting damage to the linkage and/or implements connected to the linkage when the linkage and/or implement experiences a compression force. With the front loader connected to the rear linkage of the tractor, existing control systems in the linkage can be utilised. For example, if the front loader bucket is pushed horizontally into a heap of earth for loading the bucket, the force applied to front loader and tractor will increase the deeper the bucket digs into the heap of earth. If the driver does not decrease the vehicle speed, damage to the tractor and/or loader may occur. When sensor 80 detects a massive increase of force the control system decreases the vehicle speed to prevent it stalling.

With a front loader connected to the rear linkage of a tractor the combination of the movement of the front loader and the linkage movement enables the loader to reach a higher height than when mounted to the front of a tractor. The loader can also be lowered further than when mounted to the front of a tractor meaning it can be used to dig deeper.

## Claims

1. A tractor front loader (1) having a pair of loader arms (210) for attachment to the front of a tractor (2), **characterised in that** the front loader (1) is together with a rear linkage adapter (6) for mounting said loader (1) to the rear linkage (4, 5) of said tractor (2), the adapter (6) comprising a body portion (66) provided with first horizontally spaced attachment means (64) for connection with implement attachment means provided on the outer ends of the lower links (4), a pair of vertically extending spaced attachment plates (65) carried by the body portion (66), the attachment plates (65) having second attachment means (65c) for engagement with complementary attachment means (65d) provided on the inner ends of the loader arms (210) to attach the loader (1) to the adapter (6).

2. A tractor front loader (1) and rear linkage adapter (6) as claimed in claim 1, wherein the adapter further comprises two vertical supports (61) carrying a coupling ball (62) for attachment to an upper link (5) of the tractor (2).

3. A tractor front loader (1) and rear linkage adapter (6) as claimed in claim 1 or claim 2, wherein the first attachment means (64) is provided with two coupling balls (64a) for connection to two lower links (4).

## Patentansprüche

1. Frontlader (1) für ein Nutzfahrzeug, ein Zugfahrzeug oder einen Traktor mit einem Paar Laderarmen (210), die einer Anbringung, Halterung oder Befestigung an einer Front oder Vorderseite des Nutzfahrzeugs, Zugfahrzeugs oder Traktors (2) dienen, **dadurch gekennzeichnet, dass** der Frontlader (1) mit einem hinteren Befestigungsadapter (6) zusammen oder kombiniert ist, der dem Befestigen des Frontladers (1) an einer hinteren Verbindungseinrichtung (4, 5) des Nutzfahrzeugs, Zugfahrzeugs oder Traktors (2) dient, wobei der Befestigungsadapter (6) einen Körperbereich (66) aufweist, der mit ersten horizontal voneinander beabstandeten Anbringungs-, Halterungs- oder Befestigungsmitteln (64) ausgestattet ist, die dem Verbinden mit Anbringungs-, Halterungs- oder Befestigungsmitteln für ein Werkzeug oder Anbaugerät dienen, die an äußeren Endbereichen von unteren Verbindungselementen (4) vorgesehen sind, und ein Paar sich vertikal erstreckender, voneinander beabstandeter Anbringungs-, Halterungs- oder Befestigungsplatten (65) aufweist, die von dem Körperbereich (66) getragen werden, wobei die Anbringungs-, Halterungs- oder Befestigungsplatten (65) zweite Anbringungs-, Halterungs- oder Befestigungsmittel (65c) zum Eingreifen in oder Zusammenwirken mit komplementäre(n) Anbringungs-, Halterungs- oder Befestigungsmittel(n) (65d) aufweisen, die an inneren Endbereichen der Laderarme (210) vorgesehen sind, um den Frontlader (1) an dem Befestigungsadapter (6) zu befestigen.

2. Frontlader (1) und hinterer Befestigungsadapter (6) nach Anspruch 1, wobei der Befestigungsadapter zwei vertikale Stützen oder Träger (61) aufweist, die eine Kupplungskugel oder einen Kupplungskopf (62) tragen, die dem Befestigen an einem oberen Bindeglied (5) des Nutzfahrzeugs, Zugfahrzeugs oder Traktors (2) dient.

3. Frontlader (1) und hinterer Befestigungsadapter (6) nach Anspruch 1 oder 2, wobei das erste Anbringungs-, Halterungs- oder Befestigungsmittel (64) mit zwei Kupplungskugeln oder Kupplungsköpfen (64a) zum Verbinden mit zwei unteren Bindegliedern (4) ausgestattet ist.

## Revendications

1. Chargeur frontal de tracteur (1) comportant une paire de bras de chargeur (210) destinés à assurer la fixation à l'avant d'un tracteur (2), **caractérisé en ce que** le chargeur frontal (1) est associé à un adaptateur de liaison arrière (6) destiné à assurer le montage du chargeur (1) sur l'élément de liaison arrière (4, 5) dudit tracteur (2), l'adaptateur (6) comprenant une partie de corps (66) comportant des premiers moyens de fixation espacés horizontalement (64) afin d'assurer la liaison avec un moyen de fixation d'outillage agencé sur les extrémités externes des bielles inférieures (4), une paire de plaques de fixation espacées (65) s'étendant verticalement, supportées par la partie de corps (66), les plaques de fixation (65) comportant un second moyen de fixation (65c) afin d'assurer le couplage avec des moyens de fixation complémentaires (65d) agencés sur les extrémités internes des bras de chargeur (210) de manière à fixer le chargeur (1) sur l'adaptateur (6).

2. Chargeur frontal de tracteur (1) et adaptateur de liaison arrière (6) selon la revendication 1, dans lequel l'adaptateur comprend, en outre, deux supports verticaux (61) supportant une rotule de couplage (62) afin d'assurer la fixation sur une biellette supérieure (5) du tracteur (2).

3. Chargeur frontal de tracteur (1) et adaptateur de liaison arrière (6) selon la revendication 1 ou 2, dans lequel les premiers moyens de fixation (64) comportent deux rotules de couplage (64a) afin d'assurer la liaison avec deux biellettes inférieures (4).
